# EUROPEAN PATENT APPLICATION

(11) **EP 1 342 829 A2**
(43) Date of publication of application: **10.09.2003**
(21) Application number: 03100579.6
(22) Date of filing: 18.09.1997
(51) Int. Cl.: D06M 15/564, D06M 15/576, D06M 15/277, D06M 15/256, D06M 15/33

(54) **Fluorochemical composition comprising a blocked isocyanate extender and method of treatment of a fibrous substrate therewith**

(62) Divisional of application: 97945040.0
(71) Applicant: MINNESOTA MINING AND MANUFACTURING COMPANY, St. Paul, Minnesota 55133-3427 (US)
(72) Inventor: AUDENAERT, Frans A., B 1831, Diegem (BE); VANDER ELST, Pierre J.E., B 1831, Diegem (BE)
(74) Representative: Voortmans, Gilbert J.L.

(57) **Abstract**

The present invention provides a fluorochemical composition for treatment of a fibrous substrate. The fluorochemical composition comprises at least one fluorochemical compound and a blocked isocyanate extender derived from a condensation of a polyisocyanate, a diol selected from the group consisting of fatty ester diols, polyester diols, polytetramethylene glycol, dimer diols and mixtures thereof and an isocyanate blocking agent.

The present invention also provides a fibrous substrate treated with the above composition and the use of the above fluorochemical composition to impart water and/or oil repellency to a fibrous substrate.

## Description

### 1. Field of the invention.

The present invention relates to a fluorochemical composition for treatment of a fibrous substrate to provide for example oil and/or water repellency properties to that fibrous substrate. The fluorochemical composition of the present invention contains a fluorochemical compound and a blocked isocyanate extender.

### 2. Background of the invention.

Organofluorine compounds (i.e., fluorochemicals) are substances typically containing portions that are fluorocarbon in nature (e.g., hydrophobic, oleophobic, and chemically inert) and portions that are organic or hydrocarbon in nature (e.g., chemically reactive in organic reactions). Some fluorochemicals are familiar to the general public, such as SCOTCHGARD™ carpet protector, which imparts oil and water repellency and stain and soil resistance to carpet. Other such substances have various industrial uses, such as reducing the surface tension of liquids, reducing evaporation and inflammability of volatile organic liquids, and improving the leveling of organic polymer coatings.

The use of fluorochemicals to provide oil and/or water repellency properties as well as other properties such as anti-soiling or stain release properties to a substrate, in particular fibrous substrates such as textiles and leather, is well known and is of substantial commercial importance.

However, fluorochemicals are generally expensive and so-called "extenders" have therefore been developed in order to reduce cost. Extenders are relatively inexpensive compared to fluorochemicals and they are a means of increasing the fluorine efficiency of a fluorochemical treatment. Modified synthetic resins, waxes, paraffin emulsions and similar products have been used as extenders. A further well-known class of extenders are those that contain a blocked isocyanate group, so called blocked isocyanate extenders.

For example, US 4,834,764 discloses urethane type blocked isocyanate extenders that are obtained by reacting a polyisocyanate with a blocking agent such as an oxime or an alcohol. US 5,466,770 discloses a blocked isocyanate extender that is derived from a polymerization of a blocked isocyanate monomer. US 5,057,377 discloses a blend of a blocked isocyanate and a fluorinated silicon polymer obtained by the polycondensation of a fluorochemical diol and a polysiloxane diol.

EP 383 310 discloses blocked isocyanate extenders that are derived from the free radical polymerization of a first vinyl monomer that contains a polysiloxane group and a second monomer that contains a blocked isocyanate group. According to EP 383 310 such blocked isocyanate extenders can be combined with a fluorochemical polymer derived from the polymerization of a fluorochemical monomer. It is however also contemplated in EP 383 310 to prepare a terpolymer of the polysiloxane monomer, the fluorochemical monomer and the monomer containing the blocked isocyanate group. Accordingly, extender and fluorochemical are then combined into a single chemical compound.

Despite the many "extenders" known in the art, there continues to be a need for further "extenders" in particular those that are capable of improving the efficiency of the fluorine treatment and more preferably "extenders" that in addition thereto do not substantially reduce the soft feel of the treated substrate or even more preferably that have no impact on the soft feel or improve the soft feel of a treated substrate. It is further desirable that such "extenders" can be readily synthesized at a low cost and have a good storage stability. The "extenders" should also be compatible with the fluorine treatment of the substrate.

### 3. Summary of the invention.

In accordance with the present invention there is provided a fluorochemical composition for treatment of a fibrous substrate, said fluorochemical composition comprising at least one fluorochemical compound and a blocked isocyanate extender derived from a condensation of a polyisocyanate, a diol selected from the group consisting of fatty ester diols, polysiloxane diols, polyester diols, polytetramethylene glycol, dimer diols and mixtures thereof and an isocyanate blocking agent.

The present invention also provides a fibrous substrate treated with the above composition and the use of the above fluorochemical composition to impart water and/or oil repellency to a fibrous substrate.

The present invention further provides a method of treatment of a fibrous substrate comprising providing to at least part of a surface of said fibrous substrate, a fluorochemical composition comprising at least one fluorochemical compound and a blocked isocyanate extender derived from a condensation of a polyisocyanate, a diol selected from the group consisting of fatty ester diols, polysiloxane diols, polyester diols, polytetramethylene glycol, dimer diols and mixtures thereof and an isocyanate blocking agent.

### 4. Detailed description of the invention.

The blocked isocyanate extenders of this invention can be obtained by a well-known condensation reaction of a polyisocyanate, a diol selected from the group consisting of fatty ester diols, polysiloxane diols, polyester diols, polytetramethylene glycol, dimer diols and mixtures thereof and an isocyanate blocking agent. The blocked isocyanate extenders preferably contain between 1 and 20 units, more preferably between 2 and 15 units derived from the diol.

Suitable polyisocyanates include aliphatic and aromatic di- and tri- isocyanates. Examples include aromatic diisocyanates such as 4,4'-methylenediphenylenediisocyanate, 4,6-di-(trifluoromethyl)-1,3-benzene diisocyanate, 2,4-toluenediisocyanate, 2,6-toluene diisocyanate, o, m, and p-xylylene diisocyanate, 4,4'-diisocyanatodiphenylether, 3,3'-dichloro-4,4'-diisocyanatodiphenylmethane, 4,5'-diphenyldiisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3-naphthylene diisocyanate, and 1,8-dinitro-2,7-naphthylene diisocyanate; alicyclic diisocyanates such as 3-isocyanatomethyl-3,5,5-trimethylcyclohexylisocyanate; 3-isocyanatomethyl-3,5,5-trimethylcyclohexylisocyanate; aliphatic diisocyanates such as 1,6-hexamethylenediisocyanate, 2,2,4-trimethyl-1,6-hexamethylenediisocyanate, and 1,2-ethylenediisocyanate; aliphatic triisocyanates such as 1,3,6-hexamethylenetriisocyanate; aromatic tri-isocyanates such as polymethylenepolyphenylisocyanate (PAPI); cyclic diisocyanates such as isophorone diisocyanate (IPDI) and dicyclohexylmethane-4,4'-diisocyanate.

Also useful are isocyanates containing internal isocyanate-derived moieties such as biuret-containing tri-isocyanates such as that available from Bayer as DESMODUR™ N-100, isocyanurate-containing tri-isocyanates such as that available from Huls AG, Germany, as IPDI-1890, and azetedinedione-containing diisocyanates such as that available from Bayer as DESMODUR™ TT. Also, other di- or tri-isocyanates such as those available from Bayer as DESMODUR™ L and DESMODUR™ W, and tri-(4-isocyanatophenyl)-methane (available from Bayer as DESMODUR™ R) are suitable.

The diol is selected from the group consisting of fatty ester diols, polysiloxane diols, polyester diols, polytetramethylene glycol, dimer diols and mixtures thereof. Fatty ester diols for use in the present invention are preferably diols that include an ester function derived from a fatty acid, preferably a fatty acid having at least 5 carbon atoms and more preferably at least 8 carbon atoms. Examples of fatty ester diols include glycerol monooleate, glycerol mono-stearate, glycerol mono-ricinoleate, glycerol mono-tallow, long chain alkyl di-esters of pentaerythritol having at least 5 carbon atoms in the alkyl group. Suitable fatty ester diols are commercially available under the brand RILANIT® from Henkel and examples include RILANIT® GMS, RILANIT® GMRO and RILANIT® HE.

Preferably, the diol used is a polysiloxane diol such as a polydialkylsiloxane diol or a polyalkylarylsiloxane diol. It has been found that a blocked isocyanate containing polysiloxane segments improves the efficiency of the fluorine treatment while increasing the soft feel of the fibrous substrate. Particularly preferred polysiloxane diols include polydialkylsiloxanes having an alkyl group of 1 to 4 carbon atoms and polyalkylarylsiloxanes. The polymerization degree of the polysiloxane diol is preferably between 10 and 50 and more preferably between 10 and 30. Especially preferred polysiloxane diols correspond to one of the following two formulas: 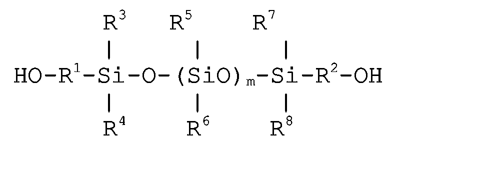 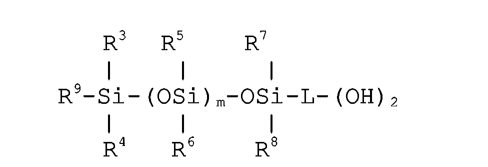 wherein R¹ and R² independently represent an alkylene having 1 to 4 carbon atoms, R³, R⁴, R⁵, R⁶, R⁷, R⁸ and R⁹ independently represent an alkyl group having 1 to 4 carbon atoms or an aryl group, L represents a trivalent linking group and m represents a value of 10 to 50. L is for example a linear or branched alkylene that may contain one or more catenary hetero atoms such as oxygen or nitrogen.

Further suitable for use in this invention are polyester diols. Examples include linear polyesters available under the brand UNIFLEX from Union Camp and polyesters derived from dimer acids or dimer diols. Dimer acids and dimer diols are well-known and are obtained by dimerisation of unsaturated acids or diols in particular of unsaturated long chain aliphatic acids or diols (e.g. at least 5 carbon atoms). Examples of polyesters obtainable from dimer acids and/or dimer diols are those available under the brand PRIPLAST from Unichema Chemicals Inc..

Suitable dimer diols for use as the diol in the preparation of the blocked isocyanate of this invention are commercially available from Unichema Chemicals Inc. under the brand PRIPOL. It is furthermore contemplated that a mixture of diols is used in the preparation of the blocked isocyanate extender. For example a mixture of a polysiloxane diol and a dimer diol can be used.

Isocyanate blocking agents for use in this invention are compounds that upon reaction with an isocyanate group yields a group that is unreactive at room temperature with compounds that at room temperature normally react with an isocyanate but which group at elevated temperature reacts with isocyanate reactive compounds. Examples of isocyanate blocking agents for use in this invention include alcohols such as mono alkanols such as methanol, ethanol, n-propyl alcohol, isopropyl alcohol, n-butyl alcohol, isobutyl alcohol, t-butyl alcohol, n-amyl alcohol, t-amyl alcohol, 2-ethylhexanol, glycidol, (iso)stearylalcohol; aryl alcohols (e.g., phenols, cresols, nitrophenols, o- and p-chlorophenol, napthols, 4-hydroxybiphenyl); C₂ to C₈ alkanone oximes (e.g., acetone oxime, butanone oxime); benzophenone oxime; aryl-thiols (e.g., thiophenol); organic carbanion active hydrogen compounds (e.g., diethyl malonate, acetylacetone, ethyl acetoacetate, ethylcyanoacetate); epsilon-caprolactone; primary or secondary amines (e.g., butyl amine); secondary amino mercaptans. A single compound or a mixture of different masking or blocking agents may be used. Particularly preferred isocyanate blocking or masking agents include C₂ to C₈ alkanone oximes, e.g., 2-butanone oxime, monofunctional alcohols such as 2-ethylhexanol and (iso)stearylalcohol.

The condensation reaction to prepare the blocked isocyanate extender can be carried out under conventional conditions well-known to those skilled in the art. Preferably the reaction is run in the presence of a catalyst. Suitable catalysts include tin salts such as dibutyltin dilaurate, stannous octanoate, stannous oleate, tin dibutyldi-(2-ethyl hexanoate), stannous chloride; and others known to those skilled in the art. The amount of catalyst present will depend on the particular reaction, and thus it is not practical to recite particular preferred concentrations. Generally, however, suitable catalyst concentrations are from about 0.001 percent to about 10 percent, preferably about 0.1 percent to about 5 percent, by weight based on the total weight of the reactants.

The condensation reaction is preferably carried out under dry conditions in a common organic solvent that does not contain Zerewittenoff hydrogens such as ethyl acetate, acetone, methyl isobutyl ketone, toluene and the like. Suitable reaction temperatures will be easily determined by those skilled in the art based on the particular reagents, solvents, and catalysts being used. While it is not practical to enumerate particular temperatures suitable for all situations, generally suitable temperatures are between about room temperature and about 120 deg. C.

The amount of diol used is preferably such to react with 30% to 65% of the number of isocyanates groups and the amount of blocking agent is preferably selected such as to react with 70% to 35% of the number of isocyanate groups in the reaction mixture.

In general, fluorochemical compounds useful in this invention include any of the known fluoroaliphatic radical-containing agents useful for the treatment of fabrics to obtain oil and water repellency. The fluoroaliphatic radical, called R_{f} for brevity, is stable, inert, nonpolar, preferably saturated, monovalent and both oleophobic and hydrophobic. The R_{f} group preferably contains at least about 3 carbon atoms, more preferably 3 to about 20 carbon atoms, and most preferably about 6 to about 14 carbon atoms. R_{f} can contain straight chain, branched chain, or cyclic fluorinated alkylene groups or combinations thereof with straight chain, branched chain, or cyclic alkylene groups. R_{f} is preferably free of polymerizable olefinic unsaturation and can optionally contain catenary heteroatoms such as oxygen, divalent or hexavalent sulfur, or nitrogen. It is preferred that R_{f} contains about 40% to about 80% fluorine by weight, more preferably about 50% to about 78% fluorine by weight. The terminal portion of the R_{f} group is fully fluorinated preferably containing at least 7 fluorine atoms, e.g., CF₃CF₂CF₂--, (CF₃)₂CF--, --CF₂SF₅, or the like. Perfluorinated aliphatic groups (i.e., those of the formula CₙF₂ₙ₊₁) are the most preferred embodiments of R_{f}.

Examples of useful fluorochemical agents include, for example, R_{f} -containing urethanes, ureas, esters, amines (and salts thereof), amides, acids (and salts thereof), carbodiimides, guanidines, allophanates, biurets, oxazolidinones, and other substances containing one or more R_{f} groups, as well as mixtures and blends thereof. Such agents are well known to those skilled in the art, see e.g., Kirk-Othmer, Encyclopedia of Chemical Technology, 3rd Ed., Vol. 24, pp. 448-451 and many (e.g., SCOTCHGARD®. Fabric Protector, 3M) are commercially available as ready-made formulations. Useful fluorochemical agents can be polymers containing multiple R_{f} groups such as copolymers of fluorochemical acrylate and/or methacrylate monomers with copolymerizable monomers.

The amount of fluorochemical compound and blocked isocyanate extender in the fluorochemical composition is selected such as to obtain the desired properties, for example oil and/or water repellency, on the fibrous substrate. Typically, the amount of blocked isocyanate extender is between 15 parts by weight and 45 parts by weight for 100 parts by weight of the fluorochemical compound used.

The fluorochemical composition of this invention can be applied using conventional application methods but is preferably used as an aqueous emulsion. Alternatively it can be used as a treatment composition in solvent. An aqueous emulsion will generally contain water, an amount of fluorochemical composition effective to provide repellent properties to a substrate treated therewith, and a surfactant in an amount effective to stabilize the emulsion. Water is preferably present in an amount of about 70 to about 2000 parts by weight based on 100 parts by weight of the fluorochemical composition of the invention. The surfactant is preferably present in an amount of about 1 to about 25 parts by weight, preferably about 2 to about 10 parts by weight, based on 100 parts by weight of the fluorochemical composition. Conventional cationic, nonionic, anionic, and zwitterionic surfactants are suitable.

The amount of the treating composition applied to a substrate in accordance with this invention is chosen so that a sufficiently high level of the desired properties are imparted to the substrate surface, said amount usually being such that 0.01% to 5% by weight, preferably 0.05% to 2% by weight, based on the weight of the substrate, of fluorochemical composition is present on the treated substrate. The amount which is sufficient to impart desired properties can be determined empirically and can be increased as necessary or desired.

The fibrous substrates treated by the fluorochemical composition of this invention are not especially limited and include textile fabrics, wood, non-wovens and paper. The fluorochemical composition of the present invention is particularly suitable to provide oil and/or water repellency to textile.

In order to affect treatment of a textile substrate, the substrate can be immersed in a diluted emulsion. The saturated substrate can then be run through a padder/roller to remove excess emulsion, dried and cured in an oven at a temperature and for a time sufficient to provide a cured treated substrate. This curing process is typically carried out at temperatures between about 50°C and about 190°C depending on the particular system or application method used. In general, a temperature of about 120°C to 170°C, in particular of about 150°C to about 170°C for a period of about 20 seconds to 10 minutes, preferably 3 to 5 minutes, is suitable.

The invention is further illustrated by reference to the following examples without however the intention to limit the invention thereto.

### Formulation and treatment procedure

Treatment baths were formulated containing a defined amount of the fluorochemical composition according to the invention. Treatments were applied to the test substrates by padding at a concentration of 0.4% solids (based on fabric weight and indicated as SOF (solids on fabric)) unless otherwise indicated, and drying and curing at 150°C to 170°C for 1.5 to 3 minutes. Substrates used for the evaluation of treatments of this invention are all commercially available and are listed below :
- PES/CO :: Grey polyester/cotton 65/35, style No. 2681, obtained through Utexbel N.V., Ghent, Belgium
- 100% PA :: Polyamide microfiber, style No. 7819, obtained from Sofinal, Belgium
- 100% PES :: Polyester microfiber, style No. 6145, obtained from Sofinal, Belgium

Respective data of water and oil repellency shown in the Examples and Comparative Examples are based on the following methods of measurement and evaluation criteria:

### Bundesmann Test

The impregnating effect of rain on treated substrates was determined using the Bundesmann Test Method (DIN 53888).

In this test, the treated substrates were subjected to a simulated rainfall, while the back of the substrate was being rubbed. The appearance of the upper exposed surface was checked visually after 1, 5 and 10 minutes and was given a rating between 1 (complete surface wetting) and 5 (no water remains on the surface). Besides the observation of the wetting pattern also the water absorption (% abs) after 10 min rain test was measured. The lower the % absorption, the better the treatment.

### Water Spray Test (SR)

The spray rating of a treated substrate is indicative of the dynamic repellency of the treated substrate to water that impinges on the treated substrate. The spray rating was measured by Standard Test Number 22, published in the 1985 Technical Manual and Yearbook of the American Association of Textile Chemists and Colorists (AATCC), and was expressed in terms of 'spray rating' (SR) of the tested substrate. The spray rating was obtained by spraying 250 ml water on the substrate from a height of 15 cm. The wetting pattern was visually rated : using a 0 to 100 scale, where 0 meant complete wetting and 100 meant no wetting at all.

### Water Repellency (WR)

The water repellency (WR) of a treated substrate was measured using a water-isopropyl alcohol test liquid, and was expressed in terms of the "WR" rating of the treated substrate. Treated substrates which were penetrated by or resistant only to a 100% water - 0% isopropyl alcohol liquid, the least penetrating of the test liquids, were given a rating of 0, whereas treated substrates resistant to a 0% water - 100% isopropyl alcohol test liquid, the most penetrating of the test mixtures, were given a rating of 10. Other intermediate values were determined by use of other water-isopropyl alcohol test liquids, in which the percentage amounts of water and isopropyl alcohol were each multiples of 10. The WR rating corresponded to the most penetrating test liquid which did not penetrate or wet the substrate after 15 seconds contact. In general, a water repellency rating of 2 or greater is desirable.

### Oil Repellency (OR)

The oil repellency of a treated substrate was measured by the American Association of Textile Chemists and Colorists (AATCC) Standard Test Method No. 118-1983, which test was based on the resistance of a treated substrate to penetration by oils of varying surface tensions. Treated substrates resistant only to Nujol®, mineral oil (the least penetrating of the test oils) were given a rating of 1, whereas treated substrates resistant to heptane (the most penetrating of the test oils) were given a rating of 8. Other intermediate values were determined by use of other pure oils or mixtures of oils, as shown in the following table.

### Standard Test Liquids

| AATCC Oil Repellency Rating Number | Composition |
|---|---|
| 1 | Nujol® Oil |
| 2 | Nujol® Oil/n-hexadecane 65/35 |
| 3 | n-Hexadecane |
| 4 | n-Tetradecane |
| 5 | n-Dodecane |
| 6 | n-Decane |
| 7 | n-Octane |
| 8 | n-Heptane |

### Laundering procedure

The procedure set forth below was used to prepare treated substrate samples designated in the examples below "x HL" (number of Home Launderings).

A 230 g sample of generally square, 400 cm² to about 900 cm² sheets of treated substrate was placed in a washing machine along with a ballast sample (1.9 kg of 8 oz fabric in the form of generally square, hemmed 8100 cm² sheets). Conventional detergent (46 g "Sapton", available from Henkel) was added and the washer was filled to high water level with hot water (40°C +- 3°C). The substrate and ballast load were washed several times (indicated as x HL) using a 12-minute normal wash cycle followed by five rinse cycles and centrifuging. The samples were not dried between repeat cycles.

Ironing procedure (indicated as x HL Iron) :After drying, the samples were pressed using an iron at a temperature set for the fiber of the substrate.

Tumble dry procedure (x HL TD) : the substrate and ballast were dried together in a conventional tumble drier at 70-75°C, at a setting for "normal dry". The machine turned itself off when the environmental humidity dropped below a given value. This generally took 15-20 minutes depending upon the load in the machine. Materials tested after a tumble dry cycle were labeled x HL TD.

The laundering procedure was followed by performance tests.

### Dry Clean Procedure

The ability of a substrate treated with a composition of the invention to continue performing its function after being subjected to dry cleaning was determined using '3M Laboratory Dry Cleaning Procedure I," Scotchgard™ Protector, 3M Test Methods, October 1, 1988. The dry cleaning procedure was repeated 5 times (indicated as 5DC) and was followed by performance tests such as the Water Spray Test (SR) or the Oil Repellency Test (OR) described above.

### Evaluation of Fabric 'Hand' or softness

Treated fabrics were rated for their 'hand', i.e., their softness, smoothness, pliability and fluffiness to the touch, as this feature is important for the comfort and aesthetic appeal of repellent textile substrates. A scale of 10 to 1 was used, where a rating of 10 was given to those treatments which left the fabric the softest, while a rating of 1 was given to those treatments which gave the fabric the harshest hand (i.e., provided a rough, stiff, cardboard-like feel). The ratings in between were assigned to intermediate hand values. The ratings were an average of the evaluation by a test panel (4-7 persons).

### Abbreviations

The following abbreviations and trade names are used in the examples :
FC: fluorochemical composition
MIBK : Methyl isobutyl ketone
BO : 2-butanone oxime
MEFOSEA : N-methyl perfluorooctyl sulfonamidoethyl (meth)acrylate
EHMA : ethylhexyl methacrylate
HOEMA: hydroxyethylmethacrylate
ODMA : Octadecyl methacrylate
PAPI : Voranate™ M220 : polymethylene polyphenyl isocyanate, available from Dow Chemical
MDI : 4,4'-methylene diphenyl diisocyanate, available from Bayer
IS-M143 : Isonate™ M143, available from Dow Chemical
Cynthane® 3160 : aliphatic polyisocyanate resin, available from Cyanamid
Atpol™ E5721 : alkylethoxylate, available from ICI
Rewopon™ IM/OA : imidazoline type surfactant, available from Rewo, Germany Ethoquad™ 18/25 : methyl polyoxyethylene(15) octadecyl ammonium chloride, available from Akzo
IM11™, VP1610 and SLM 50400 : alpha, omega-hydroxy organofunctional polydimethylsiloxanes, available from Wacker
PDMS 2000-MA : polydimethylsiloxane methacrylate with number average molecular weight 2000, available from Shin Etsu
T650 : Terathane™ 650 : polytetramethylene oxide, available from Dupont de Nemours Pripol™ 2033 : (P2033): dimer acid ester diol, available from Unichema
Priplast™ 3193 : dimer based polyester diol, available from Unichema
Rilanit™ HE : dicarbonic acid ester diol, available from Henkel
Rilanit™ GMS : glycerine mono tallow fatty acid ester, available from Henkel
Rilanit™ GMRO : glycerine mono ricinoleate, available from Henkel
Radiamuls™ MG 2900 : glycerol monostearate, available from Fina Chemicals
Uniflex™ 313 : polyester diol, available from Union Camp
X-22-176B : Polydimethylsiloxane, available from Shin Etsu
DBTDL : dibutyltin dilaurate

All parts, ratios, percentages, etc. in the following examples and the rest of the specification, are by weight unless otherwise noted.

### Synthesis of blocked isocyanates

Several blocked isocyanates as given in table 1 have been prepared following a procedure similar to the synthesis of PAPI/Radiamuls™ MG 2900/BO (3/2/5) which was prepared as follows :

A reaction flask, equipped with a reflux condenser, a mechanical teflon blade stirrer, a thermometer, a nitrogen inlet and vacuo outlet, was charged with 0.15 moles (55 g) PAPI, 0.1 moles (35.7 g) Radiomuls™ MG 2900, 0.25 moles (21.7 g) 2-butanone oxime and 261 g MIBK. After addition of 2 drops DBTDL, the mixture was stirred at 75°C during 7 hours after which FTIR analysis indicated that all isocyanate was reacted.

In order to emulsify the blocked isocyanates, the product obtained above was added to a mixture of water (250g), Rewopon™ IM/OA (6.7 g) and ATPOL™ E5721 (2.2 g). After homogenisation with an ultrasonic probe (Branson 250 sonifier) the organic solvent was removed by evaporation and a 20% emulsion in water was obtained. Following the same procedure, different blocked isocyanates as given in table 1 have been synthesized.

Comparative extender CE-1 was made according to the same procedure. Comparative extender CE-2 was prepared according to the teaching of EP 383 310.

**Table 1 :**

| Composition of blocked isocyanate extenders (E) | | |
|---|---|---|
| Isocyanate | Composition | Molar Ratio |
| E-1 | PAPI/Pripol™ 2033/BO | 3/2/5 |
| E-2 | Cynthane® 3610/Pripol™ 2033/BO | 3/2/5 |
| E-3 | PAPI/Priplast™ 319380 | 3/2/5 |
| E-4 | PAPI/Pripol™ 2033/BO | 6/5/8 |
| E-5 | PAPI/VP1610/BO | 3/2/5 |
| E-6 | MDI/VP1610/BO | 2/1/2 |
| E-7 | PAPI/VP1610/BO | 2/1/4 |
| E-8 | IS-M143/VP1610/BO | 2/1/4 |
| E-9 | PAPI/IM11/BO | 6/5/8 |
| E-10 | PAPI/IM11/BO | 20/19/22 |
| E-11 | PAPI/IM11/C18 alcohol/BO | 3/2/2/3 |
| E-12 | Cynthane® 3610/Rilanit™ HE/BO | 3/2/5 |
| E-13 | PAPI/Rilanit™ GMS/BO | 3/2/5 |
| E-14 | PAPI/Rilanit™ GMRO/BO | 3/2/5 |
| E-15 | PAPI/Radiomuls™ MG 2900/BO | 3/2/5 |
| E-16 | PAPI/Radiamuls™ MG 2900/BO | 6/5/8 |
| E-17 | PAPI/Radiamuls™ MG 2900/BO | 9/8/12 |
| E-18 | PAPI/Radiamuls™ MG 2900/BO | 20/19/22 |
| E-19 | PAPI/Terathane™ 650/BO | 3/2/5 |
| E-20 | PAPI/Uniflex™ 313/BO | 3/2/5 |
| E-21 | Cynthane® 3610/T650/BO | 3/2/5 |
| E-22 | PAPI/X-22-176B/Pripol™ 2033/BO | 3/1/1/5 |
| E-23 | PAPI/SLM50400-2/P2033/BO | 3/1/1/5 |
| E-24 | PAPI/X-22-176B/Rilanit™ GMRO/BO | 3/1/1/5 |
| E-25 | PAPI/X-22-176B/T650/BO | 3/1/1/5 |
| E-26 | PAPI/SLM50400-2/T650/BO | 3/0.5/1.5/5 |
| E-27 | PAPI/X-22-176B/T650/BO | 3/0.5/1.5/5 |
| E-28 | Cynthane® 3610/X-22-176B/T650/BO | 3/1.5/0.5/5 |
| CE-1 | PAPI/BO | 1/3 |
| CE-2 | PDMS 2000-MA/(HOEMA/IPDI/BO) | 50/50 |

### Fluorochemical agents (FC)

Several of the fluorochemical treating agents used in the examples and the comparative examples of the present invention are commercially available from 3M, others have been prepared:

### Commercially available fluorochemical treating agents

FC 3542 is a blend of a fluorochemical urethane and a fluorochemical acrylate
FC 3548 is a blend of a fluorochemical urethane, a fluorochemical acrylate and a fluorochemical ester
FC 3575 is a blend of a fluorochemical urethane and a fluorochemical acrylate
FC 251 is a blend of a fluorochemical urethane and a fluorochemical acrylate
FC 3551 is a fluorochemical acrylate

### Further fluorochemical treating agents

The fluorochemical treating agent MEFOSEA/EHMA 80/20 (indicated as FC-1) used in the Examples and Comparative examples was made according to the following procedure :

A polymerization bottle was charged with 150 g MeFOSEA, 38g EHMA, 9.4 g Ethoquad™ 18/25, 1.4 g n-octylmercaptan, 0.94 g V-50™ initiator (2,2'-azobis(2-methylpropionamidine)dihydrochloride, available from Wacko, Osaka, Japan), 109 g acetone and 434 g deionized water. The reaction mixture was deaerated and covered with a nitrogen atmosphere. The polymerization bottle was capped and run in a Launder-o-meter at 73°C for 16 hours. Acetone was removed from the resulting transparent dispersion via vacuum distillation.

FC-2, a copolymer of MEFOSEA/ODMA/PDMS 2000-MA 80/15/5 was prepared according to US Patent No 5,258,458, Terpolymer A, Column 12.

### Examples 1 to 19 and comparative examples C-1 to C-10

Examples 1 to 19 illustrate the effect the blocked isocyanate extenders have on the fluorine efficiency of a fluorochemical treating agent. Treatment compositions were prepared in which one third of the fluorochemical treating agent was replaced by an extender as given in table 2. Comparative examples C-1, C-3, C-5, C-7 and C-9 were made using a blend of the fluorochemical treating agent and a conventional extender (CE-1) and comparative examples C-2, C-4, C-6, C-8 and C-10 were made with fluorochemical treating agent alone. The treating compositions were applied to PES/CO so as to give a total of 0.3% SOF (0.2% FC and 0.1% extender or 0.3% FC alone). After treatment, the substrates were cured at 150°C during 3 minutes. The performance results are given in table 2.

**Table 2 :**

| Performance results of PES/CO treated with a blend of fluorochemical treating agent and blocked isocyanate extender | | | | | | | | | | | | | |
|---|---|---|---|---|---|---|---|---|---|---|---|---|---|
| Ex No | Exten der | Initial | | 5HL (iron) | | | DC | | | Bundesmann | | | |
| | | OR | WR | OR | SR | WR | OR | SR | WR | 1' | 5' | 10' | % abs |
| FC 3542 | | | | | | | | | | | | | |
| 1 | E-1 | 5 | 7 | 5 | 85 | 7 | 4 | 80 | 6 | 5 | 3 | 2 | 15.1 |
| 2 | E-5 | 4 | 6 | 3 | 100 | 5 | 3 | 75 | 4 | 4 | 3 | 2 | 12.3 |
| 3 | E-14 | 5 | 7 | 5 | 80 | 8 | 5 | 90 | 7 | 4 | 3 | 2 | 13.6 |
| 4 | E-15 | 5 | 7 | 5 | 90 | 7 | 5 | 90 | 6 | 4 | 4 | 3 | 12.1 |
| C-1 | CE-1 | 5 | 7 | 5 | 90 | 7 | 4 | 80 | 5 | 5 | 4 | 2 | 11.9 |
| C-2 | / | 6 | 6 | 5 | 90 | 7 | 3 | 80 | 5 | 4 | 3 | 2 | 14.8 |

| FC 3548 | | | | | | | | | | | | | |
|---|---|---|---|---|---|---|---|---|---|---|---|---|---|
| 5 | E-1 | 6 | 9 | 6 | 80 | 9 | 3 | 70 | 4 | 2 | 1 | 1 | 16.3 |
| 6 | E-5 | 5 | 8 | 4 | 80 | 8 | 2 | 75 | 4 | 2 | 1 | 1 | 19.9 |
| 7 | E-14 | 6 | 9 | 6 | 75 | 9 | 4 | 75 | 6 | 2 | 1 | 1 | 17.4 |
| 8 | E-15 | 6 | 8 | 6 | 80 | 9 | 3 | 70 | 4 | 2 | 1 | 1 | 20.3 |
| C-3 | CE-1 | 6 | 9 | 6 | 80 | 9 | 3 | 80 | 6 | 2 | 1 | 1 | 16.7 |
| C-4 | / | 6 | 6 | 6 | 80 | 9 | 4 | 70 | 5 | 2 | 1 | 1 | 21.6 |

| FC 3575 | | | | | | | | | | | | | |
|---|---|---|---|---|---|---|---|---|---|---|---|---|---|
| 9 | E-1 | 5 | 6 | 4 | 80 | 7 | 2 | 75 | 3 | 2 | 1 | 1 | 21.1 |
| 10 | E-5 | 5 | 7 | 5 | 80 | 7 | 2 | 70 | 3 | 3 | 1 | 1 | 14.5 |
| 11 | E-14 | 5 | 7 | 4 | 90 | 7 | 2 | 70 | 3 | 3 | 1 | 1 | 18.1 |
| 12 | E-15 | 5 | 6 | 5 | 85 | 8 | 2 | 50 | 3 | 3 | 1 | 1 | 19.1 |
| C-5 | CE-1 | 5 | 7 | 5 | 90 | 7 | 3 | 80 | 4 | 4 | 1 | 1 | 18.2 |
| C-6 | / | 5 | 7 | 5 | 80 | 8 | 3 | 0 | 3 | 2 | 1 | 1 | 22.8 |

| FC 251 | | | | | | | | | | | | | |
|---|---|---|---|---|---|---|---|---|---|---|---|---|---|
| 13 | E-1 | 6 | 9 | 5 | 90 | 9 | 5 | 90 | 8 | 5 | 3 | 2 | 13.7 |
| 14 | E-5 | 4 | 5 | 3 | 90 | 5 | 3 | 80 | 5 | 4 | 2 | 1 | 16.5 |
| 15 | E-14 | 6 | 9 | 5 | 100 | 9 | 6 | 90 | 9 | 5 | 5 | 3 | 12.1 |
| 16 | E-15 | 6 | 9 | 5 | 100 | 9 | 6 | 100 | 9 | 5 | 4 | 4 | 6.5 |
| C-7 | CE-1 | 6 | 9 | 5 | 100 | 8 | 6 | 90 | 9 | 5 | 4 | 3 | 10.0 |
| C-8 | / | 5 | 7 | 6 | 80 | 9 | 5 | 70 | 9 | 4 | 2 | 1 | 18.4 |

| FC 3551 | | | | | | | | | | | | | |
|---|---|---|---|---|---|---|---|---|---|---|---|---|---|
| 17 | E-1 | 4 | 6 | 5 | 100 | 6 | 1 | 70 | 2 | 4 | 3 | 3 | 11.8 |
| 18 | E-5 | 2 | 4 | 3 | 90 | 5 | 1 | 50 | 1 | 4 | 3 | 2 | 15.7 |
| 19 | E-14 | 4 | 7 | 4 | 100 | 6 | 1 | 0 | 1 | 5 | 4 | 3 | 12.4 |
| 20 | E-15 | 5 | 6 | 4 | 100 | 8 | 0 | 70 | 1 | 5 | 4 | 3 | 11.0 |
| C-9 | CE-1 | 4 | 6 | 4 | 100 | 8 | 1 | 0 | 2 | 5 | 4 | 4 | 10.0 |
| C-10 | / | 5 | 7 | 4 | 70 | 8 | 0 | 0 | 2 | 5 | 3 | 2 | 16.1 |

The data shows that the blends of fluorochemical treating agent with blocked isocyanates perform at least as well as the pure fluorochemical treating agent alone, despite the fact that the total amount of fluorochemical treating agent applied to the substrates treated with the isocyanate blocked extenders considerably less than that applied in the comparative examples without extenders This indicates that the blocked isocyanate extenders indeed increase the fluorine efficiency of the fluorochemical treating agent. In some cases (e.g. with FC 251) a considerable increase in durability (both laundering and dry clean) was obtained. In all cases, a lower % absorption in Bundesmann test was observed. While the substrate treated with compositions containing comparative extender CE-1 had about the same initial performance as that obtained with treatments according to the invention, those treatments had a deleterious effect on the hand of the treated substrate.

### Examples 21 to 36 and comparative examples C-11 to C-16

In examples 21 to 36 PES/CO substrates were treated with a blend of fluorochemical treating agent and blocked isocyanates so as to give a total add-on of 0.4% SOF (0.3% FC + 0.1% extender). Comparative examples C-11, C-14 and C-12, C-15 were made with comparative extenders CE-1 and CE-2 respectively. Comparative examples C-13 and C-16 were made by treating the PES/CO with pure FC (0.4% SOF) The treated fabrics were cured at 150°C during 3 min. The dried substrates were tested for their oil and water repellency and their softness. The results are given in table 3.

**Table 3 :**

| Performance and softness of PES/CO treated with fluorochemical treating agents and blocked isocyanate extenders | | | | | | | | | |
|---|---|---|---|---|---|---|---|---|---|
| Ex No | Extender | Initial | 5HL Iron | | Bundesmann | | | | Softness |
| | | OR | OR | SR | 1' | 5' | 10' | % abs | |
| FC-251 | | | | | | | | | |
| 21 | E-1 | 6 | 6 | 90 | 5 | 5 | 4 | 10.6 | 2.6* |
| 22 | E-5 | 5 | 5 | 90 | 5 | 4 | 3 | 14 | 4.9 |
| 23 | E-15 | 6 | 6 | 90 | 5 | 5 | 4 | 12.7 | 2.4 |
| 24 | E-11 | 5 | 5 | 85 | 4 | 2 | 1 | 18.6 | 4.9* |
| 25 | E-16 | 6 | 5 | 100 | 5 | 5 | 4 | 13.2 | 2.9 |
| 26 | E-4 | 6 | 6 | 100 | 4 | 3 | 2 | 20.8 | 3.1 |
| 27 | E-9 | 5 | 5 | 90 | 2 | 1 | 1 | 24.7 | 5.4 |
| 28 | E-17 | 6 | 5 | 90 | 4 | 4 | 3 | 17 | 2.5 |
| C-11 | CE-1 | 6 | 6 | 100 | 8 | 4 | 4 | 8.1 | 1.6 |
| C-12 | CE-2 | 3 | 2 | 70 | 2 | 1 | 1 | 28.3 | 6.3 |
| C-13 | / | 6 | 6 | 85 | 5 | 3 | 2 | 15.7 | 2.8* |

| FC-3542 | | | | | | | | | |
|---|---|---|---|---|---|---|---|---|---|
| 29 | E-1 | 5 | 5 | 90 | 4 | 2 | 2 | 16.7 | 2.2* |
| 30 | E-5 | 5 | 4 | 90 | 5 | 4 | 4 | 11.8 | 4.7 |
| 31 | E-15 | 6 | 5 | 90 | 5 | 3 | 2 | 16 | 3.1 |
| 32 | E-11 | 5 | 4 | 90 | 5 | 4 | 3 | 14.8 | 5.2 |
| 33 | E-16 | 5 | 5 | 85 | 4 | 3 | 2 | 20.1 | 2.3 |
| 34 | E-4 | 5 | 5 | 85 | 3 | 2 | 1 | 19.4 | 1.9 |
| 35 | E-9 | 4 | 4 | 90 | 5 | 4 | 2 | 17.1 | 5.9 |
| 36 | E-17 | 5 | 4 | 90 | 5 | 4 | 3 | 13.4 | 2.4 |
| C-14 | CE-1 | 5 | 5 | 100 | 5 | 4 | 3 | 9.1 | 0.9 |
| C-15 | CE-2 | 4 | 3 | 90 | 1 | 1 | 1 | 26.6 | 6.8 |
| C-16 | / | 6 | 5 | 80 | 5 | 3 | 2 | 19.3 | 4.1* |
| Notes :- Initial spray rating for all samples : 100 - (*) : average value for two different pieces of treated substrates | | | | | | | | | |

This data also shows that the blocked isocyanates increase the fluorine efficiency of the fluorochemical treating agent. One third of the FC could be replaced by extender without sacrificing the oil and water repellency. In several cases, even higher water repellency was observed. Moreover, the addition of blocked isocyanate extenders to the fluorochemical treating agent does not have a deleterious effect on the hand of the treated fabric as does compositions containing the CE-1 extender. In cases where a typical "soft" extender, such as CE-2 was used (comparative examples C-12 and C-15), the treated substrates were indeed softer, but much lower oil and water repellency values were obtained, both initially and after laundering.

### Examples 37 to 40 and comparative examples C-17

In examples 37 to 40 the durability of the treatment with blends comprising fluorochemical treating agent and blocked isocyanates were evaluated. Blends of fluorochemical treating agent FC3548 with blocked isocyanates were prepared as indicated in table 4. The blends were used to treat PES/CO fabric so as to give a total add-on of 0.4% (0.3% SOF FC and 0.1% SOF extender). Comparative example C-17 was made by treating the fabric with fluorochemical treating agent alone (0.4 % SOF). The treated fabric was dried at 150°C during 3 min. The performance was evaluated initially and after extended laundering (combined with tumble dry drying or ironing). The results are given in table 4.

**Table 4 :**

| Durability of a treatment on PES/CO done with a blend of FC 3548 and blocked isocyanates | | | | | | |
|---|---|---|---|---|---|---|
| Extender | Oil/water | Ex 37 E-1 | Ex 38 E-5 | Ex 39 E-14 | Ex 40 E-19 | C-17 / |
| Initial | OR | 6 | 6 | 6 | 6 | 6 |
| | SR | 100 | 100 | 90 | 90 | 90 |
| | WR | 9 | 9 | 9 | 9 | 9 |
| 5HL TD | OR | 6 | 5 | 5 | 6 | 6 |
| | SR | 75 | 80 | 80 | 70 | 80 |
| | WR | 9 | 8 | 8 | 8 | 8 |
| 5 HL Iron | OR | 6 | 5 | 6 | 6 | 6 |
| | SR | 85 | 100 | 85 | 80 | 80 |
| | WR | 9 | 9 | 9 | 10 | 9 |
| 20 HL TD | OR | 5 | 4 | 5 | 5 | 5 |
| | SR | 70 | 70 | 70 | 70 | 50 |
| | WR | 8 | 7 | 8 | 8 | 8 |
| 20 HL Iron | OR | 6 | 5 | 6 | 6 | 6 |
| | SR | 75 | 80 | 80 | 75 | 80 |
| | WR | 9 | 8 | 9 | 9 | 9 |
| 40 HL TD | OR | 4 | 3 | 4 | 4 | 4 |
| | SR | 70 | 70 | 70 | 50 | 50 |
| | WR | 6 | 5 | 7 | 7 | 7 |
| 40 HL Iron | OR | 5 | 5 | 6 | 5 | 5 |
| | SR | 70 | 75 | 75 | 70 | 70 |
| | WR | 8 | 8 | 8 | 9 | 8 |
| 60 HL TD | OR | 2 | 2 | 2 | 3 | 3 |
| | SR | 50 | 50 | 50 | 50 | 50 |
| | WR | 3 | 2 | 4 | 5 | 5 |
| 60 HL Iron | OR | 5 | 4 | 5 | 5 | 4 |
| | SR | 70 | 70 | 75 | 70 | 50 |
| | WR | 8 | 6 | 8 | 7 | 8 |

Replacement of 0.1% SOF FC 3548 with extenders according to the invention resulted in equal or even slightly better initial performance. The performance results of the fabrics treated with the fluorochemical agent/extender blends according to the invention were better after 40 launderings with tumble dry than fabrics treated with fluorochemical alone.. After 60 launderings with ironing, an improved spray rating was noticed, indicating that the extenders had a positive influence on the life-time cycle of the fluorochemical treatment.

### Examples 41 to 45 and comparative example C-18

The same experiment was repeated with fluorochemical treating agent FC 3542. The results are given in table 5.

**Table 5 :**

| Durability of a treatment on PES/CO done with a blend of FC 3542 and blocked isocyanates | | | | | | |
|---|---|---|---|---|---|---|
| Extender | Oil/water | Ex 42 E-1 | Ex 43 E-5 | Ex 44 E-14 | Ex 45 E-19 | C-18 / |
| Initial | OR | 6 | 5 | 5 | 6 | 6 |
| | SR | 100 | 100 | 100 | 100 | 100 |
| | WR | 7 | 7 | 7 | 7 | 7 |
| 5 HL TD | OR | 4 | 4 | 4 | 4 | 5 |
| | SR | 80 | 85 | 80 | 85 | 80 |
| | WR | 5 | 5 | 5 | 6 | 6 |
| 5 HL Iron | OR | 5 | 5 | 5 | 5 | 5 |
| | SR | 100 | 100 | 95 | 100 | 100 |
| | WR | 7 | 7 | 7 | 8 | 7 |
| 20 HL TD | OR | 4 | 3 | 3 | 4 | 3 |
| | SR | 80 | 70 | 70 | 80 | 70 |
| | WR | 5 | 5 | 5 | 5 | 5 |
| 20 HL Iron | OR | 5 | 4 | 5 | 5 | 5 |
| | SR | 85 | 85 | 90 | 90 | 85 |
| | WR | 7 | 5 | 7 | 7 | 7 |
| 40 HL TD | OR | 2 | 2 | 2 | 2 | 3 |
| | SR | 70 | 70 | 70 | 75 | 75 |
| | WR | 3 | 2 | 3 | 3 | 3 |
| 40 HL Iron | OR | 4 | 4 | 4 | 4 | 5 |
| | SR | 80 | 80 | 80 | 75 | 75 |
| | WR | 6 | 5 | 6 | 5 | 6 |
| 60 HL TD | OR | 2 | 2 | 2 | 2 | 2 |
| | SR | 50 | 60 | 50 | 60 | 50 |
| | WR | 3 | 2 | 2 | 3 | 3 |
| 60 HL Iron | OR | 4 | 3 | 4 | 4 | 3 |
| | SR | 70 | 75 | 75 | 70 | 75 |
| | WR | 6 | 5 | 5 | 5 | 5 |

The results indicated that the combination of 0.3% SOF fluorochemical treating agent with 0.1% SOF extender according to the invention provided repellency properties to the fabric which were equivalent to a treatment of 0.4% SOF fluorochemical treating agent alone, even after 60 launderings, tumble dry or ironing, which once more illustrated the positive effect of the extender on fluorochemical efficiency.

### Examples 46 to 54 and comparative examples C-19 to C-21

In examples 46 to 54 experimental fluorochemical treating agent FC-2 was blended with different blocked isocyanates based on siloxane diols in a weight ratio of 70/30. Different substrates were treated with the compositions so as to give a total add-on of 0.6% SOF for polyester microfiber or 0.65% SOF for polyamide microfiber and PES/CO. The treated fabrics were cured at 170°C during 1.5 min. The performance results are given in table 6.

**Table 6 :**

| Performance results of substrates treated with a blend of fluorochemical treating agent and blocked isocyanates | | | | | | | | | | | | |
|---|---|---|---|---|---|---|---|---|---|---|---|---|
| Ex No | Extender | Initial | Bundesmann | | | | 5HL TD | | 5 HL iron | | 5 DC | |
| | | OR | 1' | 5' | 10' | % abs | OR | SR | OR | SR | OR | SR |
| Polyester microfiber | | | | | | | | | | | | |
| 46 | E-6 | 2 | 5 | 5 | 5 | 11 | 1 | 70 | 3 | 85 | 2 | 80 |
| 47 | E-7 | 2 | 5 | 4 | 3 | 2 | 1 | 80 | 2 | 95 | 3 | 95 |
| 48 | E-8 | 2 | 5 | 5 | 5 | 3 | 2 | 85 | 2 | 95 | 2 | 95 |
| C-19 | / | 3 | 5 | 5 | 5 | 3 | 0 | 0 | 1 | 50 | 0 | 60 |

| PES/CO | | | | | | | | | | | | |
|---|---|---|---|---|---|---|---|---|---|---|---|---|
| 49 | E-6 | 6 | 5 | 4 | 4 | 7 | 4 | 85 | 5 | 90 | 5 | 85 |
| 50 | E-7 | 6 | 5 | 5 | 5 | 6 | 4 | 85 | 5 | 95 | 5 | 85 |
| 51 | E-8 | 6 | 5 | 5 | 5 | 5 | 4 | 80 | 5 | 95 | 5 | 90 |
| C-20 | / | 5 | 1 | 1 | 1 | 26 | 2 | 50 | 5 | 50 | 3 | 60 |

| Polyamide microfiber | | | | | | | | | | | | |
|---|---|---|---|---|---|---|---|---|---|---|---|---|
| 52 | E-6 | 6 | 5 | 3 | 1 | 30 | 2 | 60 | 5 | 85 | 5 | 70 |
| 53 | E-7 | 6 | 5 | 5 | 5 | 8 | 3 | 85 | 5 | 85 | 5 | 80 |
| 54 | E-8 | 6 | 5 | 5 | 5 | 7 | 3 | 80 | 5 | 85 | 5 | 80 |
| C-21 | / | 4 | 5 | 4 | 3 | 16 | 0 | 0 | 3 | 50 | 3 | 50 |
| Note : initial spray rating : 100 for all samples, except for C-20 : 85 | | | | | | | | | | | | |

As can be seen, the fabrics treated with a blend of fluorochemical treating agent and blocked isocyanates show much higher durability than the fabrics treated with fluorochemical treating agent alone. On PES/CO substrate also higher initial water repellency was observed.

### Examples 55 to 63 and comparative examples C-22 to C-24

In examples 55 to 63 the same kind of experiment was repeated with experimental fluorochemical treating agent FC-1.

The performance results are given in table 7.

**Table 7 :**

| Performance results of substrates treated with experimental fluorochemical treating agent and blocked isocyanates | | | | | | | | | | | | |
|---|---|---|---|---|---|---|---|---|---|---|---|---|
| Ex No | Extender | Initial | Bundesmann | | | | 5HL TD | | 5 HL iron | | 5 DC | |
| | | OR | 1' | 5' | 10' | % abs | OR | SR | OR | SR | OR | SR |
| Polyester microfiber | | | | | | | | | | | | |
| 55 | E-6 | 1 | 5 | 4 | 4 | 6 | 1 | 0 | 2 | 70 | 2 | 70 |
| 56 | E-7 | 1 | 5 | 5 | 5 | 3 | 1 | 0 | 2 | 85 | 1 | 85 |
| 57 | E-8 | 2 | 5 | 5 | 5 | 3 | 1 | 60 | 1 | 85 | 1 | 85 |
| C-22 | / | 3 | 5 | 5 | 5 | 7 | 0 | 0 | 1 | 60 | 0 | 50 |

| PES/CO | | | | | | | | | | | | |
|---|---|---|---|---|---|---|---|---|---|---|---|---|
| 58 | E-6 | 6 | 5 | 5 | 5 | 6 | 4 | 70 | 6 | 85 | 2 | 60 |
| 59 | E-7 | 6 | 5 | 5 | 5 | 7 | 4 | 90 | 6 | 90 | 5 | 70 |
| 60 | E-8 | 6 | 5 | 5 | 5 | 6 | 4 | 80 | 6 | 90 | 5 | 85 |
| C-23 | / | 5 | 3 | 1 | 1 | 20 | 1 | 0 | 4 | 50 | 3 | 50 |

| Polyamide microfiber | | | | | | | | | | | | |
|---|---|---|---|---|---|---|---|---|---|---|---|---|
| 61 | E-6 | 6 | 5 | 4 | 4 | 9 | 2 | 60 | 4 | 80 | 2 | 50 |
| 62 | E-7 | 6 | 5 | 5 | 5 | 4 | 1 | 70 | 4 | 90 | 4 | 70 |
| 63 | E-8 | 6 | 5 | 5 | 5 | 6 | 2 | 70 | 3 | 90 | 4 | 70 |
| C-24 | / | 5 | 5 | 5 | 5 | 6 | 0 | 0 | 1 | 50 | 2 | 50 |

Although 30% of the fluorochemical treating agent was replaced by blocked isocyanate extenders according to the invention, initial performance (dynamic repellency) could be drastically improved (e.g. PES/CO); in all cases, much higher durability was observed.

### Example 64 to 67 and comparative examples C-25 and C-26

In examples 64 to 67 higher molecular weight blocked isocyanates were evaluated together with fluorochemical treating agents FC 251 and FC 3542. PES/CO fabric was treated with the compositions so as to give a total add-on level of 0.4% (0.3% FC + 0.1 % extender). Comparative examples C-25 and C-26 were made with 0.4% SOF of fluorochemical agent alone. The results are given in table 8.

**Table 8 :**

| Performance results of treated PES/CO | | | | | | | | | | |
|---|---|---|---|---|---|---|---|---|---|---|
| Ex No | Extender | Initial | Bundesmann | | | | 5HL TD | | 5 HL iron | |
| | | OR | 1' | 5' | 10' | % abs | OR | SR | OR | SR |
| FC 3542 | | | | | | | | | | |
| 64 | E-10 | 5 | 4 | 2 | 1 | 18.7 | 2 | 70 | 4 | 80 |
| 65 | E-18 | 5 | 5 | 4 | 3 | 10.3 | 3 | 80 | 4 | 90 |
| C-25 | / | 5 | 5 | 4 | 3 | 11.6 | 3 | 70 | 4 | 80 |

| FC251 | | | | | | | | | | |
|---|---|---|---|---|---|---|---|---|---|---|
| 66 | E-10 | 5 | 3 | 1 | 1 | 19.1 | 2 | 70 | 4 | 80 |
| 67 | E-18 | 6 | 5 | 3 | 2 | 17.7 | 3 | 70 | 5 | 85 |
| C-26 | / | 5 | 5 | 4 | 3 | 15.3 | 4 | 70 | 5 | 80 |

The results indicated that higher molecular weight blocked isocyanates were also efficient extenders. Depending on higher compatibility of the fluorochemical agent with the extender, better results were obtained (FC 3542 versus FC 251). High initial performance (dynamic repellency) as well as high durability were observed.

## Claims

1. A fluorochemical composition for treatment of a fibrous substrate, said fluorochemical composition comprising at least one fluorochemical compound and a blocked isocyanate extender derived from a condensation of a polyisocyanate, a diol selected from the group consisting of fatty ester diols, having at least 5 carbon atoms, polyester diols, polytetramethylene glycol, dimer diols and mixtures thereof and an isocyanate blocking agent.

2. A fluorochemical composition according to claim 1 wherein said blocked isocyanate extender comprises condensation products having between 1 and 20 units derived from said diol.

3. A fluorochemical composition according to claim 1 or 2 wherein said fluorochemical composition is in the form of an aqueous dispersion further comprising an emulsifier or wherein said fluorochemical composition is in the form of a solution in an organic solvent.

4. A fluorochemical composition according to claim 1 wherein said polyester diol is a dimer diol or a dimer acid based polyester diol.

5. A fluorochemical composition according to claim 1 wherein said fatty ester diol is selected from the group consisting of glycerol mono oleate, glycerol mono stearate, glycerol mono ricinoleate and glycerol mono tallow.

6. A fluorochemical composition according to claim 1 wherein said isocyanate blocking agent is selected from the group consisting of mono-alkanols, aryl alcohols and C₂ to C₈ alkanone oximes.

7. A fluorochemical composition according to claim 1 wherein said fluorochemical compound is capable of providing oil and/or water repellency properties to a fibrous substrate.

8. A method of treatment of a fibrous substrate comprising providing to at least part of a surface of said fibrous substrate a fluorochemical composition as defined in any of claims 1 to 7.
